# EUROPEAN PATENT SPECIFICATION

(11) **EP 3 495 680 B1**
(45) Date of publication and mention of the grant of the patent: **22.09.2021**
(21) Application number: 18209538.0
(22) Date of filing: 30.11.2018
(51) Int. Cl.: F16C 41/00, F16C 17/02, F16C 33/20, C09D 1/00, C09D 7/40

(54) **SLIDING ELEMENT FOR AN ENGINE COMPRISING SURFACE TREATED METAL PARTICULATE**
GLEITELEMENT FÜR EINEN MOTOR MIT OBERFLÄCHENBEHANDELTEM METALLPARTIKEL
ÉLÉMENT COULISSANT POUR MOTEUR COMPRENANT DES PARTICULES MÉTALLIQUES TRAITÉES EN SURFACE

(30) Priority: 07.12.2017 GB 201720441
(43) Date of publication of application: 12.06.2019
(73) Proprietor: Mahle International GmbH, 70376 Stuttgart (DE); Mahle Engine Systems UK Limited, Rugby, Warwickshire CV23 0WE (GB)
(72) Inventor: HARVEY, Jennifer, Bedworth, Warwickshire CV12 9LZ (GB); KARMIOS, Ellen, Rugby, Warwickshire CV21 1PU (GB)
(74) Representative: BRP Renaud & Partner mbB Rechtsanwälte Patentanwälte Steuerberater

(56) References cited:
- EP-A1- 3 284 965
- WO-A1-2015/024897
- DE-A1- 19 520 312
- DE-A1-102009 043 435
- US-A1- 2011 317 955

## Description

### FIELD OF THE INVENTION

The present invention relates to sliding engine components having a polymer-based bearing "overlay" layer, and in particular to sliding engine components having a polymer-based bearing "overlay" layer which comprises surface treated metallic particulate.

Such sliding engine components may include bearing lining shells, bushes, bearing surfaces of crankshafts, bearing surfaces of camshafts, bearing surfaces of connecting rods, thrust washers, bearing surfaces of a bearing block, bearing surfaces of a bearing cap, and piston assembly components such as piston rings, piston skirts, and cylinder walls and cylinder liners.

### BACKGROUND TO THE PRESENT INVENTION

In internal combustion engines, the bearing assemblies typically each comprise a pair of half bearings retaining a crankshaft that is rotatable about an axis. Each half bearing is a hollow generally semi-cylindrical bearing shell, and typically at least one is a flange half bearing, in which the bearing shell is provided with a generally semi-annular thrust washer extending outwardly (radially) at each axial end. In other bearing assemblies it is also known to use an annular or circular thrust washer.

The bearing surfaces of sliding bearings generally have a layered construction, in which a strong backing material is coated with one or more layers having preferred tribological properties, which provide the bearing surface that faces the cooperating moving part, in use. In known half bearings and thrust washers: the strong backing material may be steel, having a thickness of about 1mm or more; the bearings surface is coated with a layer (the "overlay") of 6 µm to 25 µm of a plastic polymer-based composite layer; and optionally at least one intervening layer (a "lining layer") may be provided between the backing and the overlay layer, such as an aluminium-based material (e.g. aluminium-tin alloy) or a copper-based material (e.g. copper-tin bronze), adhered to the backing, and the thickness of the optional lining layer is generally in the range from about 0.1 mm to 0.5 mm (e.g. 300 µm of aluminium-tin alloy).

It is known in the field to use composite plastic polymer-based overlay layers on a steel backing, in which the overlay comprises a matrix of a polymer material, having distributed throughout the matrix mechanical performance enhancing additives, such as metal particles to improve wear resistance, silane compounds to improve adhesion to the underlying substrate, and dry lubricant particulate to enhance lubrication in the event of contact between the bearing surface and the cooperating moving part. The metal particles may be a silvery-coloured metal powder (e.g. aluminium), copper-coloured metal powder (e.g. copper). The metal particles may impart conformability and improve heat distribution throughout the overlay. Alternatively to the metal particles, or additionally, the wear resistance may be improved by the addition of other hard-wearing particulate. This typically results in a cured polymer matrix which is the same or similar in appearance to the steel backing

It is also known to add coloured pigment to the polymer-based matrix in order to colour the polymer-based overlay layer. The colour of the pigment may be chosen to provide the polymer-based overlay layer with a colour that is different to the colour of the underlying substrate. This allows the presence of the polymer-based overlay layer to be readily determined simply by looking at the bearing surface and observing the colour.

For example, WO 2015/024898 A2 describes a plastic polymer-based composite material for use as an overlay layer on a steel backing, in which the overlay comprises a matrix of a polyamide/imide-based polymer, having distributed throughout the matrix: from 10 to 15%vol pigment; from 1 to less than 15 %vol of a metal particulate (e.g. metal powder and/or metal flakes); from 1 to 15 %vol of a fluoropolymer, the balance being polyamide/imide resin apart from incidental impurities; and 3 to 6 %vol of silane compound. For example, the polymer-based ovelayer may comprise 12.5 %vol Al, 5.7 %vol PTFE particulate, 4.8 %vol silane, <0.1 %vol other components, and balance polyamide/imide, apart from incidental impurities.

However, while the coloured pigment imparts a chosen colour to the polymer-based matrix, it does not enhance any of the mechanical properties of the polymer-based overlay layer. In other words, the use of a coloured pigment introduces a quantity of non-functionality to the polymer-based matrix. Further, it has been found that the addition coloured pigment in the levels required to provide a polymer-based overlay layer with a colour that is different to the colour of the underlying substrate can compromise the structural integrity, the wear resistance, the fatigue properties, and the seizure resistance of the polymer matrix. It may also adversely affect the hardness and/or strength of the polymer matrix. By contrast, the use of coloured pigment in low levels does not alter the colour of the polymer-based matrix sufficiently for it to be distinguished from the underlying substrate. The range of colours and colour intensities is therefore limited when adding coloured pigments to colour polymer-based overlays.

WO 2015/024897 A1 discloses a sliding element according to the preamble of claim 1.

EP 3 284 965 A1 and US 2011/317955 A1 also disclose sliding elements with a polymer-based overlay containing metal particles.

There is therefore a need to provide a means for controlling the colour of a polymer-based overlay to a greater degree without compromising the mechanical properties of the overlay.

### SUMMARY OF THE PRESENT INVENTION

According to a first aspect of the present invention, there is provided a sliding engine element according to claim 1.

As used herein, the term "surface treated" or "surface functionalised" means that a surface of the metal particulate is somehow changed. The surface treatment involves the addition of material to a surface of the metal particulate (e.g. applying a coating).

The skilled person will understand that the polymer-based overlay layer may not necessarily be in direct contact with the surface of the metallic substrate since, as discussed below, the sliding engine element may further comprise an intermediate layer or layers between the metallic substrate and the polymer-based overlay layer.

It has been observed that the surface treatment methods described below do not significantly alter the size or geometry of the metal particulate and the methods are also advantageously not expected to compromise the mechanical properties of the metal particulate.

Without wishing to be bound by theory, it is also expected that the surface treated metal particulate will advantageously have improved storage and sheer stability, improved resistance to weathering, and exhibit a lower tendency to agglomerate in the coating compared to equivalent metal particulate which has not been surface treated.

The addition of the surface treated metal particulate may avoid the requirement to apply identifying features to the surface of the component by a stamping process or through an additional printing or etching process, which would require additional manufacturing steps and may interfere with the operation of the component. For example, in the case of a bearing shell, an identification mark stamped into the outer surface risks bruising the inner surface, which is configured to cooperate with a rotating journal with very small tolerances. Similarly, printing or etching an identification mark onto the outside of a bearing shell may affect the way in which the bearing shell sits within its housing, in use, thereby affecting performance.

The metallic substrate is preferably from a strong metal to give the bearing element greater structural rigidity. Suitable metallic substrate materials include: steel, aluminium, bronze, brass, bismuth, copper, nickel, tin, zinc, silver, gold and iron, or alloys of such materials. The substrate may comprise a combination of two or more such materials or alloys. Particularly suitable substrate materials for bearing elements embodying the present invention include steel, iron, aluminium, copper alloy, bronze, and brass alloys.

The sliding engine element may further include an intermediate layer or bearing lining layer which may provide an improved surface for adhesion of the polymer-based overlay layer when certain metallic substrate materials are used. Suitable materials for the optional intermediate layer include aluminium, tin, nickel, silver, copper and/or iron or alloys comprising one or more of such materials. The optional intermediate layer may comprise a combination of two or more or such materials/alloys. The intermediate layer may also include an adhesion promoter and/or be subjected to a pre-treatment, for example a phosphating, chromating or silicating treatment.

The polymer-based matrix comprises a polymeric material. Examples of suitable polymeric materials include or may comprise: cross-linkable bonding agents; thermosetting plastics; high melting point thermoplastics; materials having a matrix of at least one high melting point thermoplastic material; fibre-reinforced plastics; any combination of these materials. Other suitable materials are envisaged and will be readily apparent to the skilled person. Particularly suitable polymeric materials include: PAI (polyamide imide); PI (polyimide); epoxy; epoxy resin; acrylate resin; polyurethane, fluoropolymer, polyetheretherketone, formaldehyde resin, PBI (Polybenzimideazole); phenolic resin; silicone resin; or a combination of any of these materials. These materials are characterised by high temperature resistance and excellent media resistance (such as chemical resistance to lubricants). One particularly preferred polymeric material for bearing elements embodying the present invention is polyamide imide (PAI).

In addition to the metal particulate, the polymer-based overlay layer may comprise hard particles dispersed throughout the polymer-based matrix. Suitable hard particles include: nitrides; carbides; borides; and oxides. Other suitable materials are envisaged and will be readily apparent to the skilled person. The provision of hard particles improves the wear resistance properties of the polymer-based overlay layer.

As described above, in polymer-based overlay layers of the prior art, metal particulate is typically added to the plastic polymer-based matrix solution as a dry powder. However, it has been found that where the metal particulate is a surface treated metal particulate, it is advantageous to add it to the plastic polymer-based matrix solution as a slurry. It has been found that the addition of the surface treated metal particulate as a slurry advantageously leads to a better distribution of the metal particulate resulting in better colour dispersion throughout the polymer-based matrix.

The polymer-based overlay layer is deposited as a mixture of a plastic polymer-based matrix material and suspended material, and may further comprise solvent, which may facilitate forming the mixture. Suitable solvents may be non-polar (e.g. xylene, toluene), polar aprotic (e.g. acetone, n-ethyl-2-pyrrolidone {NEP}, n-methyl-2-pyrrolidone {NMP}, gamma- butyrolactone, dipropylene glycol dimethyl ether) or polar protic (e.g. water, alcohol, glycol). The solvent can be employed in various proportions in order to achieve a particular desired viscosity of mixture for coating onto the substrate.

The polymer-based overlay layer may also comprise silane material. Silane materials have been found to promote stability of the polyamide/imide matrix and have also been found to promote adhesion of the polyamide/imide resin material to the substrate. A suitable silane material may be gamma-aminopropyltriethoxysilane (e.g. 3-aminopropyltriethoxysilane). A suitable alternative silane material may comprise bis-(gamma- trimethoxysilpropyl)amine.

The polymer-based overlay layer may further comprise from 1 to 20 wt% of a dry lubricant particulate, and a preferred range of 8 to 12 wt%. A dry lubricant particulate may be included in the overlay layer for its beneficial effect on material frictional properties and its self-lubricating effect. Suitable dry lubricant particulates include fluoropolymer, molybdenum disulfide (MoS₂), tungsten disulphide (WS₂), hexagonal boron nitride (h-BN), metal sulphides with layered structures, and graphite, or a combination of any of these materials. The fluoropolymer particulate addition may preferably be constituted by polytetrafluoroethylene (PTFE), as this is the most effective of the fluoropolymers in terms of reducing the friction coefficient and improving the self-lubricating properties of the polymer-based overlay layer. However, other suitable fluoropolymers, such as fluorinated ethylene-propylene (FEP), may be used if desired. Other suitable materials are envisaged and will be readily apparent to the skilled person.

Below 1 wt% of the dry lubricant particulate, the improvement in wear resistance and tribological properties is not significant. Above 20 wt% of the dry lubricant particulate, the structural integrity of the polymer-based overlay layer may be compromised. Particle size of the dry lubricant particulate desirably lies in the range from 1 µm to 5 µm, and a size range of 2 µm to 4 µm is preferred.

The polymer-based overlay layer may further comprise other components such as leveller. Where a leveller is present, it is present in an amount of less than 1 wt%, preferably less than 0.5 wt%. For example, the polymer-based overlay layer may comprise about 0.1 wt% leveller. The leveller is a surface coating additive designed to improve wetting of the polymer-based matrix on the metal substrate when the polymer-based matrix is applied to the substrate. Improved wetting advantageously results in a polymer-based overlay layer having a more even thickness.

Preferably, the surface treated metal particulate imparts a colour to the polymer-based overlay layer.

As used herein, the term "imparts a colour" means that the colour of the polymer-based overlay layer is substantially determined by the addition of the surface treated metal particulate.

Preferably, the colour of the polymer-based overlay is different from a colour of the metallic substrate.

The surface treatment of the metal particulate is selected such that it imparts a colour to the polymer-based overlay layer.

The provision of surface treated metal particulate material to impart colour to polymer-based overlay layers is advantageous since it removes the need for the addition of separate pigments which can compromise the mechanical properties of the overlay layer. The colour may be detectable by a machine or a human.

The provision of a surface treated metal particulate which provides the polymer-based overlay layer with a colour enables enhanced reliability during manufacturing, by facilitating a visual distinction between sliding engine components that have and have not been coated with a composite polymer-based overlay layer, and to distinguish between sliding engine components having different coatings. This facilitates distinguishing between sliding engine components of different colours in an automated quality control process. This can help prevent miss-assembly during manufacture. The colours caused by the surface treated metal particulate may be identifiable by machines such as assembly robots and may therefore assist with automated manufacture of automotive components

Preferably the colour is visually discernible from the colour of the metallic substrate.

This is advantageous where the polymer-based overlay layer might otherwise match or be similar to the colour of the metallic substrate (e.g. an otherwise silver-coloured layer on a silver-coloured substrate). Furthermore, since the colour of the polymer-based overlay layer is visually discernible from a colour of the metallic substrate, a user is able to identify sliding elements embodying the present invention by simple visual inspection. This may also help a user to visually distinguish between several components which have been provided with different coatings, one of which is the polymer-based overlay layer of preferred embodiments of the present invention. This may advantageously help prevent miss-assembly during manufacture.

Preferably, the surface treated metal particulate appears a different colour to the same metal particulate without the surface treatment.

This allows the surface treated metal particulate itself to be distinguished from metal particulate which has not been surface treated which may simplify manufacture of the polymer-based overlay layer.

The surface treated metal particulate causes the polymer-based overlay layer to appear a different colour to the colour the overlay layer would appear if it comprised the same metal particulate but without the surface treatment, with all other elements of the polymer-based overlay layer being kept the same.

This may advantageously enable different overlay layers with the same or similar mechanical performance enhancing additives to be distinguished (e.g. use of the surface treated metal particulate can enable manual or automatic identification of different curing regimes). The addition of a surface treated metal particulate enables the sliding engine components to be distinguished from those of a different provenance, so enhancing traceability.

Preferably, the surface treated metal particulate causes the polymer-based overlay layer to appear a colour other than silver, white, or grey.

This is advantageous since the metallic substrate itself can appear silver, white, or grey meaning that the overlay layer will be clearly distinguished from the metallic substrate itself.

Preferably, the surface treated metal particulate causes the polymer-based overlay layer to appear gold, orange, or yellow. Optionally, the surface treated metal particulate may cause the polymer-based overlay layer to appear pale yellow in colour.

The provision of these colours is advantageous since they are all very different to the colours of both the metallic substrate and the polymer-based matrix without the surface treated metal particulate. The presence of a particular polymer-based overlay layer will therefore be clearly apparent where any of these colours is used.

Preferably, the polymer-based overlay layer comprises between about 5 wt% and about 40 wt% of the surface treated metal particulate. More preferably, between about 10 wt% and about 30 wt% of the surface treated metal particulate. More preferably, between about 24 wt% and about 28 wt% of the surface treated metal particulate. For example, the polymer-based overlay layer may comprise 26 wt% of the surface treated metal particulate.

As used herein, quantities of components described in weight percentages (wt%) refer to the weight percent of the components in the final cured coating, i.e. when the solvent has been removed and the polymer matrix has cured.

Advantageously, the metal particulate enhances the thermal conductivity of the overlay layer. The metal particulate may further enhance the fatigue and seizure resistance of the overlay layer. Below 5 wt% of the metal particulate, the improvement in fatigue and seizure resistance are not significant. Above about 40 wt% of the metal particulate, the structural integrity of the polymer-based overlay layer may be compromised.

The metal particulate may be chosen from: aluminium, aluminium alloys, copper, copper alloys, silver, tungsten, stainless steel. We have found that aluminium particulate gives the best results. The metal particulate may be any metal particulate but preferably comprises metal flakes. The flake-like nature of the particulate generally results in the maximum area of metal particulate being exposed to a co-operating shaft journal by virtue of the plane of the flakes orientating generally parallel to the bearing surface. The provision of flakes within the polymer-based overlay layer that are generally parallel to the bearing surface may be provided by spray deposition of the polymer-based overlay layer.

A further advantage of the platelet flake morphology of the metal particulate is that the flakes are more securely bonded to the polymer-based matrix by virtue of the relatively large surface area of each individual flake, and thus resists metal flakes becoming plucked from the polymer-based matrix during engine operation.

Preferably, the metal particulate comprises aluminium flakes.

Preferably, the surface treated aluminium flakes have a D50 size of between about 5 µm and about 30 µm along the maximal dimension. More preferably, a D50 size of between about 10 µm and about 20 µm along the maximal dimension. This has been found to provide a particularly suitable form of metal particulate addition. D50 is the median diameter of the particle size distribution of the aluminium flakes.

The metal particulate is surface treated by coating the surface of the metal particulate with coloured transition metal oxide. The coating may be applied using any suitable method, for example spraying or dipping the particulate. This advantageously provides a greater choice of colours for the polymer-based overlay layer.

It has been found that the provision in polymer-based overlay layers of aluminium flakes surface coated in a coloured transition metal oxide can give the overlay layer a gold, or orange colour.

Examples of coloured transition metal oxides include but are not limited to: iron oxide, nickel oxide, chromium oxide, and copper oxide.

The metal particulate may comprise a plurality of different surface treated metal particulates. For example, the metal particulate may comprise aluminium flakes which have undergone controlled oxidation and aluminium flakes coated with a coloured transition metal oxide. The metal particulate may further comprise metal particles which are not surface treated. For example, the metal particulate may comprise aluminium flakes which are not surface treated.

The relative quantities metal particulate having different surface treatments as well as metal particulate having no surface treatment may be chosen so as to customise the colour of the polymer-based overlay layer. It is conceivable that the thermal conductivity of the surface treated metal particulate may differ from the thermal conductivity of equivalent metal particulate without surface treatment. Accordingly, the relative quantities of metal particulate with and without surface treatment may be chosen so as to customise the thermal conductivity of the polymer-based overlay.

Preferably, the polymer-based overlay layer has a thickness of between about 3 µm and about 17 µm. More preferably, between about 6 µm and about 12 µm. For example, the polymer-based overlay layer may have a thickness of about 10 µm.

In a second aspect of the present invention, there is provided an engine comprising a sliding engine element according to the first aspect of the present invention.

In a third aspect of the present invention, there is provided a method of producing a sliding engine element. The method comprises steps of, providing a polymer-based matrix, providing a slurry comprising a surface treated metal particulate, combining the slurry and the polymer-based matrix, applying the polymer-based matrix and slurry combination to a metal substrate, curing the polymer-based matrix and slurry combination to form a polymer-based overlay layer comprising surface treated metal particulate, wherein the surface treated metal particulate causes the polymer-based overlay layer to appear a different colour to the surface of the metallic substrate.

The polymer-based matrix may be applied to the metal substrate by a number of different methods. Suitable methods include spraying, pad printing (an indirect offset printing process, e.g. in which a silicone pad transfers a patterned layer of the plastic polymer composite material onto the sliding bearing substrate), screen printing, or by a transfer rolling process. The deposition step may comprise the deposition of several sub-layers to build up the overall polymer-based overlay layer. The method may further comprise a flash-off phase between each sub-layer deposition to remove the solvent. Each sub-layer may comprise the same composition of polymer-based matrix. Alternatively, each sub-layer may comprise different compositions of the polymer-based matrix.

The curing step may take place at about 140°C to 300°C. The thermal curing may be provided by baking in an oven or irradiating the sliding engine element with infrared radiation. Alternatively, the polymer-based overlay layer may be cured by a non-thermal process, for example being cured by exposure to ultraviolet light. The curing step may take between about 2 mins and about 2.5 hours. For example, the curing step may take about 2 hours.

It should be appreciated that any feature in one aspect of the invention may be applied to other aspects of the invention within the scope of the appended claims.

### BRIEF DESCRIPTION OF THE DRAWINGS

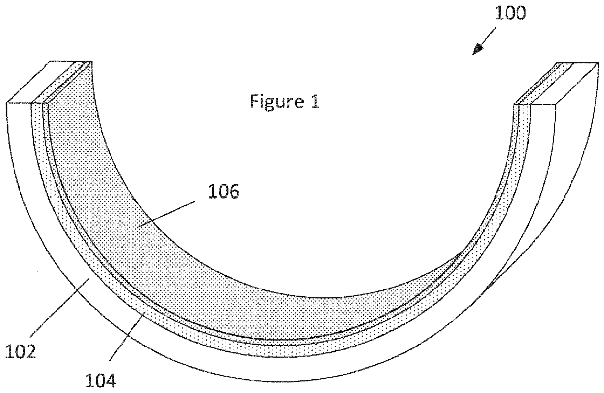

The invention will further be described by way of example only with reference to the accompanying drawing, in which:-
Figure 1 shows a perspective view of a bearing shell according to preferred embodiments of the present invention. The figure provided herein is schematic and not to scale.

### DETAILED DESCRIPTION OF PREFERRED EMBODIMENTS

Figure 1 schematically illustrates a sliding bearing 100 (e.g. a sliding engine component) in the form of a hollow semi-cylindrical bearing lining shell (commonly referred to as a "half bearing"). Many alternative shapes and configurations of the bearing element are envisaged and will be readily apparent to the skilled person. The sliding bearing 100 has a metallic substrate 102 formed from steel. The sliding bearing 100 further comprises a bearing lining layer 104 on the concave inner surface of the metallic substrate 102. Bearing lining layer 104 comprises an aluminium-tin alloy. A polymer-based overlay layer 106 is provided on the substrate 102. The overlay layer 106 is configured to provide a running surface over the lifetime of the sliding bearing 100. The overlay layer 106 is the innermost layer of the half bearing, which is configured to face a cooperating moving part (not shown) in a bearing assembly (e.g. the overlay layer receives a journaled shaft in an assembled bearing, which mutually cooperate, with an intervening film of lubricating oil).

The overlay layer 106 comprises a polymer-based matrix formed from polyamide imide (PAI). The overlay layer 106 further comprises aluminium flakes which have been coated in a layer of coloured transition metal oxide to form a surface treated metal particulate. Alternatively, a surface of the aluminium flakes may have been subjected to a controlled oxidation process. The aluminium flakes have a D50 size of between about 10 µm and about 20 µm along the maximal dimension. The overlay layer 106 comprises 26 wt% of the aluminium flakes dispersed evenly throughout the polymer-based matrix. The overlay layer 106 further comprises 10 wt% polytetrafluoroethylene (PTFE) to act as a dry lubricant. The dry lubricant has a particle size of about 3 µm. The overlay layer 106 further comprises less than 0.5 wt% leveller and silane as an adhesion agent.

The overlay layer 106 has a thickness of about 10 µm and appears gold in colour due to the coated aluminium flakes.

To form the sliding bearing 100 having a polymer based overlay layer 106, the polymer (PAI) is added to a premixed solvent blend to form a solution. The dry lubricant and the leveller are added to the solution to form a suspension. The aluminium flakes are made into a slurry with a premixed solvent blend and this slurry added to the solution. The silane is then added to the solution.

The polymer-based matrix solution is then applied to the metallic substrate 102 which may already have a bearing lining layer 104 on its inner surface. The polymer-based matrix solution is applied by spraying to form a series of sub-layers. After the deposition of each sub-layer, the solvent is removed by a flash-off phase. After deposition, the polymer-based matrix solution is cured by heating the sliding bearing 100.

Although illustrated in Figure 1 in relation to a half bearing shell, the present invention equally applies to other sliding engine components, including semi-annular, annular or circular thrust washers, and bushes. The mechanical performance enhancing additives (e.g. dry lubricant particulate, silane and metal particulate) dispersed within the polymer-based matrix provide significant enhancements to the mechanical performance of the sliding engine component, such as wear resistance, adhesion promotion, fatigue resistance, and frictional properties.

## Claims

1. A sliding element for an engine, the sliding element comprising a polymer-based overlay layer on a metallic substrate, the polymer-based overlay layer comprising:
a polymer-based matrix; and
a surface treated metal particulate;
**characterized in that** the surface treated metal particulate was obtained by coating the surface of a metal particulate with a metal oxide, and the metal oxide is a coloured transition metal oxide.

2. The sliding element for an engine according to claim 1, wherein the surface treated metal particulate imparts a colour to the polymer-based overlay layer, wherein the colour is visually discernible from a colour of the metallic substrate.

3. The sliding element for an engine according to claim 2, wherein the surface treated metal particulate provides the polymer-based overlay layer with a colour that is predominantly gold or orange or yellow.

4. The sliding element for an engine according to any preceding claim, wherein the polymer-based overlay layer comprises between 5 wt% and 40 wt% of the surface treated metal particulate.

5. The sliding element for an engine according to any preceding claim, wherein the polymer-based overlay layer comprises between 24 wt% and 28 wt% of the surface treated metal particulate.

6. The sliding element for an engine according to any preceding claim, wherein the metal particulate comprises aluminium flakes.

7. The sliding element for an engine according to claim 6, wherein the surface treated aluminium flakes have a D50 size of between 5 µm and 30 µm along the maximal dimension.

8. The sliding element for an engine according to any preceeding claims wherein the metal of the metal oxide is different from the metal of the metal particulate.

9. The sliding element for an engine according to any preceding claim, wherein the polymer-based overlay layer has a thickness of between 3 µm and 17 µm.

10. An engine comprising a sliding element according to any preceding claim.

11. A method of producing the sliding element of any of claims 1-10 for an engine, the method comprising steps of:
providing a polymer-based matrix;
providing a slurry comprising a surface treated metal particulate;
combining the slurry and the polymer-based matrix;
applying the polymer-based matrix and slurry combination to a metal substrate; and
curing the polymer-based matrix and slurry combination such that a polymer-based overlay layer comprising the surface treated metal particulate is formed, wherein the surface treated metal particulate provides the polymer-based overlay layer with a discernibly different colour to a colour of the metallic substrate.

## Patentansprüche

1. Gleitelement für einen Motor, wobei das Gleitelement eine auf Polymer basierende Überlagerungsschicht auf einem metallischen Substrat umfasst, wobei die auf Polymer basierende Überlagerungsschicht umfasst:
eine auf Polymer basierende Matrix; und
ein oberflächenbehandeltes Metallteilchenmaterial;
**dadurch gekennzeichnet, dass** das oberflächenbehandelte Metallteilchenmaterial durch Beschichten der Oberfläche eines Metallteilchenmaterials mit einem Metalloxid erhalten wurde, und das Metalloxid ein farbiges Übergangsmetalloxid ist.

2. Gleitelement für eine Maschine nach Anspruch 1, wobei das oberflächenbehandelte Metallteilchenmaterial der auf Polymer basierenden Überlagerungsschicht eine Farbe verleiht, wobei die Farbe visuell von einer Farbe des metallischen Substrats unterscheidbar ist.

3. Gleitelement für eine Maschine nach Anspruch 2, wobei das oberflächenbehandelte Metallteilchenmaterial der auf Polymer basierenden Überlagerungsschicht eine Farbe verleiht, die vorherrschend Gold oder Orange oder Gelb ist.

4. Gleitelement für eine Maschine nach einem vorstehenden Anspruch, wobei die auf Polymer basierende Überlagerungsschicht zwischen 5 Gew.-% und 40 Gew.-% des oberflächenbehandelten Metallteilchenmaterials umfasst.

5. Gleitelement für eine Maschine nach einem vorstehenden Anspruch, wobei die auf Polymer basierende Überlagerungsschicht zwischen 24 Gew.-% und 28 Gew.-% des oberflächenbehandelten Metallteilchenmaterials umfasst.

6. Gleitelement für eine Maschine nach einem vorstehenden Anspruch, wobei das Metallteilchenmaterial Aluminiumflocken umfasst.

7. Gleitelement für eine Maschine nach Anspruch 6, wobei die oberflächenbehandelten Aluminiumflocken eine Größe D50 von zwischen 5 µm und 30 µm entlang des maximalen Maßes aufweisen.

8. Gleitelement für eine Maschine nach einem vorstehenden Anspruch, wobei das Metall des Metalloxids von dem Metall des Metallteilchenmaterials unterschiedlich ist.

9. Gleitelement für eine Maschine nach einem vorstehenden Anspruch, wobei die auf Polymer basierende Überlagerungsschicht eine Dicke zwischen 3 µm und 17 µm aufweist.

10. Maschine, die ein Gleitelement nach einem vorstehenden Anspruch umfasst.

11. Verfahren zum Herstellen des Gleitelements nach einem der Ansprüche 1 bis 10 für eine Maschine, wobei das Verfahren die Schritte umfasst des:
Bereitstellens einer auf Polymer basierenden Matrix;
Bereitstellens eines Schlamms, der ein oberflächenbehandeltes Metallteilchenmaterial umfasst;
Kombinierens des Schlamms und der auf Polymer basierenden Matrix;
Auftragens der Kombination aus auf Polymer basierender Matrix und Schlamm auf ein Metallsubstrat; und
Härtens der Kombination aus auf Polymer basierender Matrix und Schlamm derart, dass die auf Polymer basierende Überlagerungsschicht, die das oberflächenbehandelte Metallteilchenmaterial umfasst, gebildet wird, wobei das oberflächenbehandelte Metallteilchenmaterial die auf Polymer basierende Überlagerungsschicht mit einer von einer Farbe des Metallsubstrats unterscheidbar unterschiedlichen Farbe bereitstellt.

## Revendications

1. Élément coulissant pour un moteur, l'élément coulissant comprenant une couche de recouvrement à base de polymère sur un substrat métallique, la couche de recouvrement à base de polymère comprenant :
une matrice à base de polymère ; et
une matière particulaire métallique traitée en surface ;
**caractérisé en ce que** la matière particulaire métallique traitée en surface a été obtenue en revêtant la surface d'une matière particulaire métallique avec un oxyde de métal, et l'oxyde de métal est un oxyde de métal de transition coloré.

2. Élément coulissant pour un moteur selon la revendication 1, dans lequel la matière particulaire métallique traitée en surface confère une couleur à la couche de recouvrement à base de polymère, dans lequel la couleur peut être discernée visuellement d'une couleur du substrat métallique.

3. Élément coulissant pour un moteur selon la revendication 2, dans lequel la matière particulaire métallique traitée en surface fournit à la couche de recouvrement à base de polymère une couleur qui est principalement de l'or ou de l'orange ou du jaune.

4. Élément coulissant pour un moteur selon l'une quelconque des revendications précédentes, dans lequel la couche de recouvrement à base de polymère comprend entre 5 % en poids et 40 % en poids de la matière particulaire métallique traitée en surface.

5. Élément coulissant pour un moteur selon l'une quelconque des revendications précédentes, dans lequel la couche de recouvrement à base de polymère comprend entre 24 % en poids et 28 % en poids de la matière particulaire métallique traitée en surface.

6. Élément coulissant pour un moteur selon l'une quelconque des revendications précédentes, dans lequel la matière particulaire métallique comprend des paillettes d'aluminium.

7. Élément coulissant pour un moteur selon la revendication 6, dans lequel les paillettes d'aluminium traitées en surface présentent une taille D50 comprise entre 5 µm et 30 µm le long de la dimension maximale.

8. Élément coulissant pour un moteur selon l'une quelconque des revendications précédentes, dans lequel le métal de l'oxyde de métal est différent du métal de la matière particulaire métallique.

9. Élément coulissant pour un moteur selon l'une quelconque des revendications précédentes, dans lequel la couche de recouvrement à base de polymère présente une épaisseur comprise entre 3 µm et 17 µm.

10. Moteur comprenant un élément coulissant selon l'une quelconque des revendications précédentes.

11. Procédé de production de l'élément coulissant selon l'une quelconque des revendications 1 à 10 pour un moteur, le procédé comprenant les étapes consistant à :
fournir une matrice à base de polymère ;
fournir une suspension comprenant une matière particulaire métallique traitée en surface ;
combiner la suspension et la matrice à base de polymère ;
appliquer la combinaison de matrice à base de polymère et de suspension sur un substrat métallique ; et
durcir la combinaison de matrice à base de polymère et de suspension de sorte qu'une couche de recouvrement à base de polymère comprenant la matière particulaire métallique traitée en surface est formée, dans lequel la matière particulaire métallique traitée en surface fournit à la couche de recouvrement à base de polymère une couleur perceptiblement différente d'une couleur du substrat métallique.
